# EUROPEAN PATENT APPLICATION

(11) **EP 2 740 525 A1**
(43) Date of publication of application: **11.06.2014**
(21) Application number: 13194524.8
(22) Date of filing: 26.11.2013
(51) Int. Cl.: B01D 53/02, B01J 20/22, B01D 53/04

(54) **Carbon dioxide separation from a gas by temperature swing adsorption using organic adsorbents**

(30) Priority: 10.12.2012 JP 2012268935
(71) Applicant: Hitachi, Ltd., Tokyo 100-8280 (JP)
(72) Inventor: Yoshikawa, Kohei, Tokyo, 100-8280 (JP); Sato, Hiroki, Tokyo, 100-8280 (JP); Kaneeda, Masato, Tokyo, 100-8280 (JP); Kanno, Shuichi, Tokyo, 100-8280 (JP)
(74) Representative: Beetz & Partner

(57) **Abstract**

A CO₂ separation and recovery device capable of separating and recovering CO₂ from a CO₂-containing gas containing steam using a porous complex is provided. A CO₂ separation and recovery method, in which CO₂ is separated and recovered from a CO₂-containing gas using a CO₂ capturing material is also provided. The CO₂ capturing material includes a compound containing an organic molecule. The method includes the steps of: capturing CO₂ by allowing the CO₂-containing gas to flow through a CO₂ capturing material container packed with the CO₂ capturing material; heating the CO₂ capturing material to desorb and recover CO₂; and cooling the CO₂ capturing material. The method further includes, before the step of capturing CO₂, the step of decreasing the steam concentration in the CO₂-containing gas, and in the step of capturing CO₂, CO₂ is removed by allowing the CO₂-containing gas after decreasing the steam concentration to flow through the CO₂ capturing material container.

## Description

### BACKGROUND OF THE INVENTION

### Field of the Invention

The present invention relates to a CO₂ separation and recovery system for recovering CO₂ from a CO₂-containing gas using a solid CO₂ capturing material.

### Background Art

Global warming due to emission of greenhouse gases has become a global problem. Examples of the greenhouse gases include carbon dioxide (CO₂), methane (CH₄), and chlorofluorocarbons (CFCs). Among these, the most influential greenhouse gas is CO₂, and the reduction in its emission has become an urgent issue. As the measures for the issue, there are known a chemical absorption method, a physical absorption method, a membrane separation method, an adsorption separation method, a cryogenic separation method, etc. Among these, a CO₂ separation and recovery method using a solid CO₂ capturing material is cited.

In a CO₂ separation and recovery system using a CO₂ capturing material, CO₂ is captured and removed by introducing a CO₂-containing gas into a capturing material container packed with a CO₂ capturing material, and then, bringing the CO₂ capturing material into contact with the CO₂-containing gas. Thereafter, the captured CO₂ is desorbed by heating the CO₂ capturing material and recovered.

In order to increase the CO₂ capture capacity of the CO₂ capturing material, it is preferred that the specific surface area of the CO₂ capturing material is high. As a material having a high specific surface area, particularly, a porous complex which is a compound of an aromatic carboxylic acid and a metal element has attracted attention, and for example, in JP-A-2012-6854 (PTL 1), a hydrogen capturing material using a porous complex composed of Al and a tricarboxylic acid is described.

The porous complex described in PTL 1 is composed mainly of an organic molecule, and therefore is considered to have lower hydrothermal resistance as compared with an inorganic material, however, the measures therefor are not described in PTL 1.

### SUMMARY OF THE INVENTION

The present invention has been made in view of the above circumstances, and has an object to provide a CO₂ separation and recovery device having a structure in which an organic molecule hardly comes in contact with steam.

An aspect of the invention is directed to a CO₂ separation and recovery method, in which CO₂ is separated and recovered from a CO₂-containing gas using a CO₂ capturing material, the CO₂ capturing material including a compound containing an organic molecule, the method including the steps of: capturing CO₂ by allowing the CO₂-containing gas to flow through a CO₂ capturing material container packed with the CO₂ capturing material; heating the CO₂ capturing material to desorb and recover CO₂; and cooling the CO₂ capturing material, wherein the method further includes, before the step of capturing CO₂, the step of decreasing the steam concentration in the CO₂-containing gas; and in the step of capturing CO₂, CO₂ is removed by allowing the CO₂-containing gas after decreasing the steam concentration to flow through the CO₂ capturing material container.

According to the aspect of the present invention, CO₂ can be separated and recovered from a CO₂-containing gas containing steam using an organic molecule.

### BRIEF DESCRIPTION OF THE DRAWINGS

Fig. 1 is a graph showing the specific surface area of each of CO₂ capturing materials according to the invention of this application after a drying treatment.
Fig. 2 is a graph showing the specific surface area of each of CO₂ capturing materials according to the invention of this application after a steam treatment.
Fig. 3 is a view showing a structure of a device which is provided with a steam removing device upstream of a CO₂ capturing material in a step of capturing CO₂ in a CO₂ separation and recovery device according to the invention of this application.
Fig. 4 is a view showing a structure of a device which uses a steam capturing material in a steam removing device in a CO₂ separation and recovery device according to the invention of this application.
Fig. 5 is a view showing a structure of a device which uses a desorbed gas discharged from a CO₂ capturing material container in a step of heating a CO₂ capturing material as a heating gas by circulating the desorbed gas in a CO₂ separation and recovery device according to the invention of this application.
Fig. 6 is a view showing a structure of a device which heats a CO₂ capturing material by using a heat transfer tube in a step of heating a CO₂ capturing material in a CO₂ separation and recovery device according to the invention of this application.
Fig. 7 is a view showing a structure of a device which uses a gas after removing CO₂ discharged from a CO₂ capturing material container in a step of capturing CO₂ as a cooling gas in a step of cooling a CO₂ capturing material in a CO₂ separation and recovery device according to the invention of this application.
Fig. 8 is a view showing a structure of a device which cools a CO₂ capturing material by using a heat transfer tube in a step of cooling a CO₂ capturing material in a CO₂ separation and recovery device according to the invention of this application.
Fig. 9 is a view showing a structure of a device which uses a desorbed gas generated in a step of heating a steam capturing material as a heating gas for a CO₂ capturing material in a CO₂ separation and recovery device according to the invention of this application.

### DESCRIPTION OF THE PREFERRED EMBODIMENTS

The present inventors thought that a decrease in the specific surface area of a CO₂ capturing material can be suppressed by a CO₂ separation and recovery method, in which CO₂ is separated and recovered from a CO₂-containing gas using a CO₂ capturing material, wherein the CO₂ capturing material includes a compound containing an organic molecule, the method includes a step of capturing CO₂ by allowing the CO₂-containing gas to flow through a CO₂ capturing material container packed with the CO₂ capturing material, a step of heating the CO₂ capturing material to desorb and recover CO₂, and a step of cooling the CO₂ capturing material, the method further includes, before the step of capturing CO₂, a step of decreasing the steam concentration in the CO₂-containing gas, and in the step of capturing CO₂, CO₂ is removed by allowing the CO₂-containing gas after decreasing the steam concentration to flow through the CO₂ capturing material container.

Further, the present inventors thought that in a device which separates and recovers CO₂ from a CO₂-containing gas using a CO₂ capturing material, the CO₂ capturing material includes a compound containing an organic molecule, a step of capturing CO₂ by allowing the CO₂-containing gas to flow through a CO₂ capturing material container packed with the CO₂ capturing material, a step of heating the CO₂ capturing material to desorb and recover CO₂, and a step of cooling the CO₂ capturing material are included, and in the step of capturing CO₂, after the steam concentration in the CO₂-containing gas is decreased to 3 vol% or less, the gas is allowed to flow through the CO₂ capturing material container to remove CO₂, whereby a decrease in the specific surface area of the CO₂ capturing material can be suppressed, and CO₂ can be separated and recovered more efficiently.

The CO₂ capturing material may be any material, however, in the case where the steam concentration is 3 vol% or less, a high specific surface area can be maintained, and therefore, a CO₂ capturing material composed of a porous complex including an aromatic organic molecule containing a carboxyl group and a hydroxyl group and at least one metal selected from Zn, Ni, Mg, and Co is preferred.

In order to decrease the steam concentration in the CO₂-containing gas, it is preferred to provide a steam removing device upstream of the CO₂ capturing material container.

The method for removing steam from the CO₂-containing gas may be any method, however, examples thereof include a method for removing steam by bringing the CO₂-containing gas into contact with a steam capturing material. It suffices that this method includes a step of removing steam by bringing steam into direct contact with a steam capturing material, a step of heating the steam capturing material to desorb the captured steam, and a step of cooling the steam capturing material.

In the step of capturing steam using the steam capturing material, the CO₂-containing gas is brought into direct contact with the steam capturing material. The temperature of the CO₂-containing gas may be any temperature, but in general, it is preferably a low temperature for promoting the capture of steam. For example, in the case of a material which captures steam by adsorption, as the ratio of a steam concentration to a saturated steam concentration (a steam concentration/a saturated steam concentration) is increased, the amount of steam captured is increased, and therefore, the temperature may be set based on the ratio. In the case where the steam concentration is set to 3 vol% and the ratio is set to 0.1 or more, it suffices that the saturated steam concentration is 30 vol% or less. In this case, it suffices that the temperature of the CO₂-containing gas is 70°C or lower.

Examples of the method for heating the steam capturing material include a method for bringing a high-temperature heat medium into direct contact with the steam capturing material. In this method, since the desorption of steam is promoted, a heat medium having a low steam concentration is preferred.

As the method for heating the steam capturing material, a heat transfer tube is provided in the steam capturing material container, and the heat medium may be allowed to flow through the heat transfer tube. In the case where the heat medium is allowed to flow through the heat transfer tube, since the heat medium and the steam capturing material do not come in direct contact with each other, a gas in which the steam concentration in the heat medium is high can be used. Examples of such a gas include a combustion exhaust gas and steam.

Examples of the method for cooling the steam capturing material include a method for bringing a low-temperature cooling medium into direct contact with the steam capturing material. In this method, since the capture of steam is reduced in the cooling step, a cooling medium having a low steam concentration is preferred. Examples of such a gas include a gas after cooling discharged from the CO₂ capturing material container in the step of cooling the CO₂ capturing material.

A heat transfer tube is provided in the steam capturing material container, and the cooling medium may be allowed to flow through the heat transfer tube. In the case where the cooling medium is allowed to flow through the heat transfer tube, since the cooling medium and the steam capturing material do not come in direct contact with each other, water in a liquid phase or a gas having a high steam concentration may be used. Examples of such a gas include cooling water.

As the method for removing steam, the steam concentration may be decreased by cooling the CO₂-containing gas to condense steam. Examples of this method include a method in which after steam is condensed by cooling the CO₂-containing gas through heat-exchange with cooling water, the condensed water and the CO₂-containing gas are separated from each other using a gas-liquid separator.

There are various methods for heating the CO₂ capturing material, however, as an example, a method for bringing a high-temperature heat medium into direct contact with the CO₂ capturing material can be cited. In this method, from the viewpoint of suppressing a decrease in the specific surface area of the CO₂ capturing material, a heat medium in which the steam concentration is 3 vol% or less is preferred. Further, in order to increase the purity of CO₂ recovered, it is preferred that the CO₂ concentration in the heat medium is high. Examples of such a heat medium include a CO₂-containing gas recovered by the above-described CO₂ separation and recovery device.

As the method for heating the CO₂ capturing material, a heat transfer tube is provided in the capturing material container, and the heat medium may be allowed to flow through the heat transfer tube. In this case, since the heat medium and the CO₂ capturing material do not come in direct contact with each other, the steam concentration in the heat medium may be 3 vol% or more, and the purity of CO₂ may be low. Examples of such a heat medium include steam vaporized in a boiler and a combustion exhaust gas from a boiler.

There are various methods for cooling the heated capturing material, however, as an example, a method for bringing a low-temperature cooling medium into direct contact with the CO₂ capturing material can be cited. In this method, from the viewpoint of suppressing a decrease in the specific surface area of the CO₂ capturing material, a cooling medium having a low steam concentration is preferred. Further, from the viewpoint of suppressing a decrease in CO₂ capture capacity by capturing CO₂ in the cooling step, it is preferred that the CO₂ concentration in the cooling medium is low. Examples of such a gas include air in which the steam concentration has been decreased by a steam removing device, and a gas discharged from the capturing material container in the step of capturing CO₂. The steam concentration in the gas discharged from the capturing material container has been decreased in advance by the steam removing device, and in the case of using this gas, it is not necessary to newly provide a steam removing device for the cooling medium, and therefore, the cost can be decreased, and thus, the use of this gas is preferred.

As the method for cooling the CO₂ capturing material, a heat transfer tube is provided in the CO₂ capturing material container, and the cooling medium may be allowed to flow through the heat transfer tube. In the case where the cooling medium is allowed to flow through the heat transfer tube, since the cooling medium and the CO₂ capturing material do not come in direct contact with each other, the steam concentration in the cooling medium may be high, and also the CO₂ concentration therein may be high. Examples of such a cooling medium include air and water.

When heating the steam capturing material, a heated steam-containing gas is generated. If this steam-containing gas is used for heating the CO₂ capturing material, energy required for heating the CO₂ capturing material can be reduced, and therefore, the use of the steam-containing gas is preferred. In this case, since steam to come in contact with the CO₂ capturing material is reduced for suppressing a decrease in the specific surface area of the CO₂ capturing material, it is preferred that the steam-containing gas is allowed to flow through the heat transfer tube.

The CO₂-containing gas may be any gas, but for example, an exhaust gas from a coal firing boiler, a cement production plant, or an iron plant, and the like can be cited.

Hereinafter, Examples of the present invention will be described in detail.

### Example 1

In a beaker, 50 mL of N,N-dimethylformamide, 50 mL of water, and 50 mL of ethanol (Wako Pure Chemical Industries, Ltd.) were placed and stirred for 10 minutes. Then, 1.17 g of 2,5-dihydroxytelephthalic acid (Sigma-Aldrich, Inc.) was added thereto, and the resulting mixture was stirred for 30 minutes and dissolved. Subsequently, 4.64 g of zinc nitrate hexahydrate was added thereto, and the resulting mixture was stirred for 30 minutes and dissolved.

To the thus prepared solution, 5 mL of a 25 mass% aqueous ammonia solution (Wako Pure Chemical Industries, Ltd.) was added, and the resulting mixture was stirred for 8 hours. After the mixture was left to stand for 1 hour, filtration and washing were performed using methanol, and a precipitate was collected.

After the thus obtained precipitate was immersed in 50 mL of methanol for 16 hours, filtration and washing were performed using methanol, and a precipitate was collected. This procedure was performed 3 times.

### Example 2

A precipitate was collected in the same manner as in Example 1 except that 4.53 g of nickel (II) nitrate hexahydrate (Wako Pure Chemical Industries, Ltd.) was added in place of zinc nitrate hexahydrate.

### Example 3

A precipitate was collected in the same manner as in Example 1 except that 4.00 g of magnesium nitrate hexahydrate (Wako Pure Chemical Industries, Ltd.) was added in place of zinc nitrate hexahydrate.

### Example 4

A precipitate was collected in the same manner as in Example 1 except that 4.54 g of cobalt (II) nitrate hexahydrate (Wako Pure Chemical Industries, Ltd.) was added in place of zinc nitrate hexahydrate.

### Comparative Example

In a beaker A, 50 mL of N, N-dimethylformamide (Wako Pure Chemical Industries, Ltd.) was placed, and 1.70 g of zinc nitrate hexahydrate (Wako Pure Chemical Industries, Ltd.) was added thereto, and the resulting mixture was stirred for 30 minutes and dissolved. In a beaker B, 50 mL of N,N-dimethylformamide (Wako Pure Chemical Industries, Ltd.) was placed, and 0.507 g of telephthalic acid (Wako Pure Chemical Industries, Ltd.) was added thereto, and the resulting mixture was stirred for 30 minutes and dissolved. Then, the solution in the beaker A was added dropwise to the beaker B, and the resulting mixture was stirred for 8 hours. After the mixture was left to stand for 1 hour, filtration and washing were performed using methanol (Wako Pure Chemical Industries, Ltd.), and a precipitate was collected.

After the thus obtained precipitate was immersed in 50 mL of methanol for 16 hours, filtration and washing were performed using methanol, and a precipitate was collected. This procedure was performed 3 times.

### Evaluation method for specific surface area and average pore size

For the powders of Examples 1 to 4 and Comparative Example, a nitrogen adsorption isotherm at -196°C was measured using the Langmuir method, and a specific surface area was measured. Before the measurement, a drying treatment was performed at 120°C for 1 hour in a drying oven in an atmosphere in which the steam concentration was 3 vol% or less, and then, a pretreatment was performed in vacuo at 250°C.

### Steam treatment method

In order to evaluate the hydrothermal resistance of each CO₂ capturing material, a steam treatment was performed. Silica wool was placed in a quartz glass reaction tube, and the powder of each CO₂ capturing material was fixed. After the temperature was raised to 200°C at a temperature raising rate of 10°C/min in an electric oven in a stream of 100 vol% He, the gas to be allowed to flow was changed to a mixed gas containing 12 vol% steam and 88 vol% He, and the mixed gas was allowing to flow for 15 minutes. Thereafter, the gas to be allowed to flow was changed to 100 vol% He, and the reaction tube was cooled.

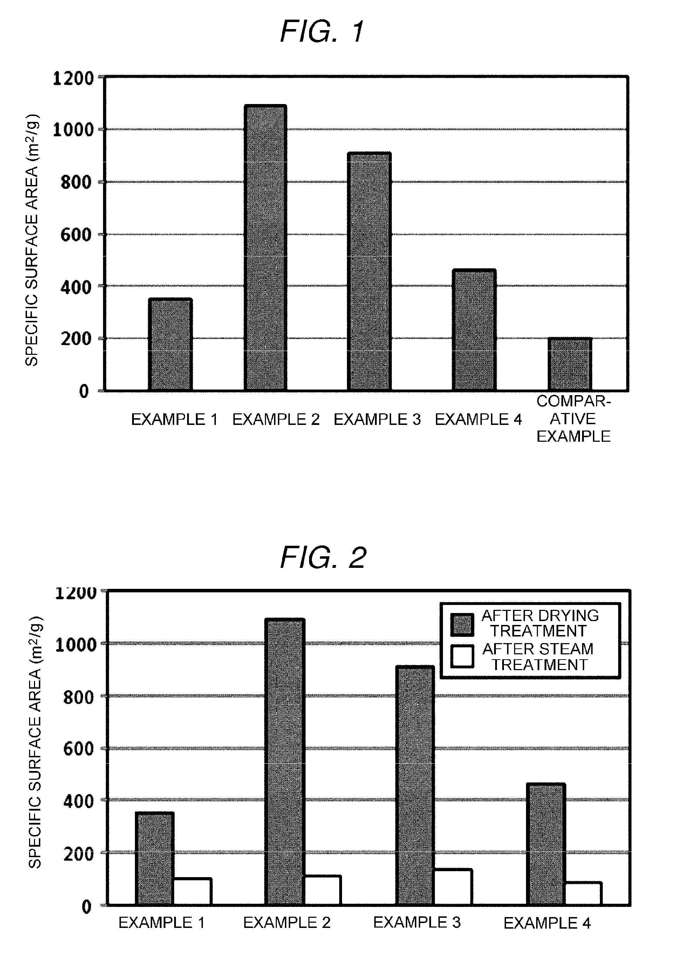

Fig. 1 shows the specific surface area of each of the CO₂ capturing materials of Examples 1 to 4 and Comparative Example. It was found that as compared with the CO₂ capturing material of Comparative Example, the CO₂ capturing materials of Examples 1 to 4 containing an aromatic molecule having a hydroxyl group and a carboxyl group and a metal element selected from Zn, Ni, Mg, and Co have a high specific surface area even after the drying treatment and the pretreatment at 250°C. Since the steam concentration during the drying treatment was 3 vol% or less, it was found that by setting the steam concentration to 3 vol% or less, a high specific surface area can be obtained.

Fig. 2 shows the specific surface area of each of the CO₂ capturing materials of Examples 1 to 4 after the steam treatment. The specific surface area of each of the capturing materials of Examples 1 to 4 was decreased to 200 m²/g or less by the steam treatment, and therefore, it was found that when these CO₂ capturing materials are used, it is necessary to set the steam concentration in the gas to come in contact with the CO₂ capturing material to at most 12 vol% or less.

### Example 5

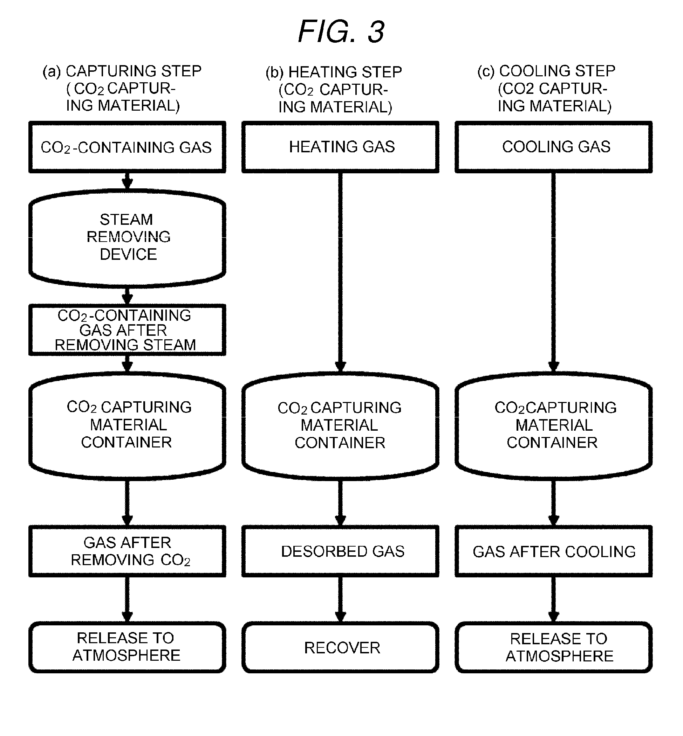

In Fig. 3, a process flow of a CO₂ separation and recovery device which uses the CO₂ capturing material of Example 1 is shown. This device is provided with a CO₂ capturing material container packed with the CO₂ capturing material of Example 1, and a steam removing device. In each of the CO₂ capturing material container and the steam removing device, a tube and a valve for changing a gas to be allowed to flow are provided. In this device, a step of capturing CO₂ by allowing a CO₂-containing gas to flow through a capturing material container (capturing step) (a), a step of heating the CO₂ capturing material to desorb and recover CO₂ (heating step) (b), and a step of cooling the CO₂ capturing material (cooling step) (c) are included, and by changing the gas to be allowed to flow, the step can be switched.

In the capturing step (a), a CO₂-containing gas is allowed to flow through the steam removing device, and the CO₂-containing gas after removing steam is discharged from the steam removing device. The CO₂-containing gas after removing steam is allowed to flow through the CO₂ capturing material container, and the gas after removing CO₂ is discharged from the CO₂ capturing material container and released to the atmosphere.

In the heating step (b), a heating gas is allowed to flow through the CO₂ capturing material container and is brought into direct contact with the CO₂ capturing material, whereby the CO₂ capturing material is heated, and a desorbed gas is discharged from the CO₂ capturing material container and recovered.

In the cooling step (c), a cooling gas is allowed to flow through the CO₂ capturing material container and is brought into direct contact with the CO₂ capturing material, whereby the CO₂ capturing material is cooled, and the gas after cooling is discharged from the CO₂ capturing material container and released to the atmosphere.

According to this structure, since the CO₂-containing gas after removing steam therein is allowed to flow through the CO₂ capturing material container, the concentration of steam to come in contact with the capturing material in the capturing step (a) can be decreased, and therefore, a decrease in the specific surface area can be suppressed.

Further, according to this structure, the concentration of steam to come in contact with the CO₂ capturing material can be decreased and therefore a decrease in the specific surface area can be suppressed by the CO₂ separation and recovery device which is provided with the steam removing device which decreases the steam concentration in the CO₂-containing gas and the CO₂ capturing material container packed with the CO₂ capturing material including a compound containing an organic molecule, and also has the tube for allowing the CO₂-containing gas having passed through the steam removing device to flow through the CO₂ capturing material container.

Further, the CO₂ capturing material can be reused by discharging and recovering the desorbed gas from the CO₂ capturing material container by the CO₂ separation and recovery device which has the tube for supplying a heating gas and a cooling gas to the CO₂ capturing material container.

Incidentally, as shown in Figs. 1 and 2, the specific surface area of the CO₂ capturing material is decreased by steam in the gas, and therefore, by decreasing the steam concentration even if only slightly before the step of capturing CO₂, a decrease in the specific surface area of the CO₂ capturing material can be suppressed, and thus, the steam concentration is not limited to that described above with reference to Figs. 1 and 2. Further, this structure can be applied to a material which causes a decrease in the specific surface area of the CO₂ capturing material by steam in the gas, and therefore, the material is not limited to those shown in Figs. 1 and 2.

Further, as a more preferred example, by allowing a gas in which the steam concentration is 12 vol% or less to flow as the heating gas and the cooling gas, the concentration of steam to come in contact with the capturing material in the heating step (b) and the cooling step (c) can be decreased, and therefore, a decrease in the specific surface area can be suppressed.

Still further, as a more preferred example, by allowing a gas in which the steam concentration is 3 vol% or less to flow as the heating gas and the cooling gas, the concentration of steam to come in contact with the capturing material in the heating step (b) and the cooling step (c) can be decreased, and therefore, a decrease in the specific surface area can be suppressed and CO₂ can be more efficiently separated and recovered.

### Example 6

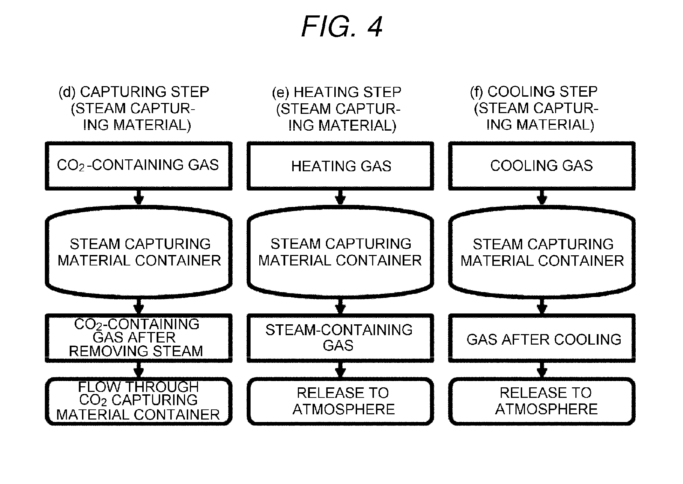

In Fig. 4, a process flow of removing steam by using a steam capturing material is shown. A steam capturing material container packed with a steam capturing material is provided in a steam removing device having a structure described in Example 5. In this device, a step of capturing steam by allowing a CO₂-containing gas to flow through the steam capturing material container (capturing step) (d), a step of heating the steam capturing material to desorb steam (heating step) (e), and a step of cooling the steam capturing material (cooling step) (f) are included, and by changing the gas to be allowed to flow, the step can be switched.

In the capturing step (d), a CO₂-containing gas is allowed to flow through the steam capturing material container, and the CO₂-containing gas after removing steam is discharged from the steam capturing material container and allowed to flow through the CO₂ capturing material container.

In the heating step (e), a heating gas is allowed to flow through the steam capturing material container and is brought into direct contact with the steam capturing material, whereby the steam capturing material is heated, and the steam-containing gas is discharged from the steam capturing material container and released to the atmosphere.

In the cooling step (f), a cooling gas is allowed to flow through the steam capturing material container and is brought into direct contact with the steam capturing material, whereby the steam capturing material is cooled, and the gas after cooling is discharged from the steam capturing material container and released to the atmosphere.

According to this structure, by changing the gas to be allowed to flow, steam can be captured repeatedly.

Further, by the CO₂ separation and recovery device having a tube for supplying the heating gas and the cooling gas to the steam removing device, the steam capturing material can be reused.

### Example 7

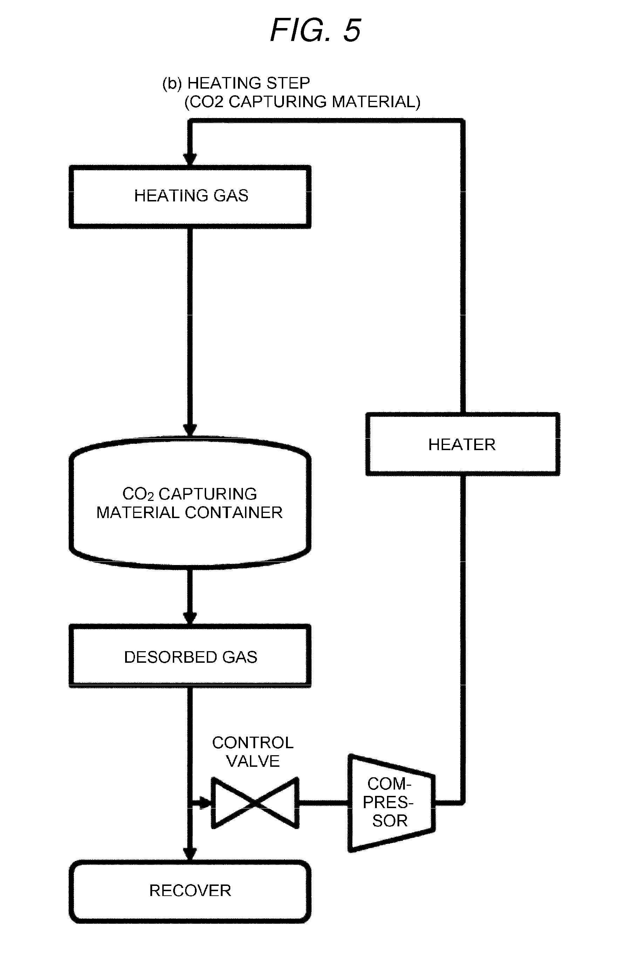

In Fig. 5, a process flow of allowing a part of the desorbed gas discharged from the CO₂ capturing material container in the heating step (b) to flow as the heating gas is shown. In addition to the structure of Example 6, a control valve for controlling the flow rate of the desorbed gas, a compressor for pressurizing the desorbed gas, and a heater for heating the desorbed gas are provided. The flow rate of a part of the desorbed gas discharged from the CO₂ capturing material container is adjusted using the control valve, and the desorbed gas is pressurized by the compressor and heated by allowing the compressed gas to flow through the heater, and then, the heated gas is allowed to flow through the CO₂ capturing material container as the heating gas.

According to this structure, since the desorbed gas is circulated and used as the heating gas, steam does not newly flow in from the outside of the device in the heating step. Therefore, the concentration of steam to come in contact with the capturing material can be decreased, and therefore, a decrease in the specific surface area can be suppressed.

Further, in the step (b) of heating the CO₂ capturing material, by bringing the heating gas in which the steam concentration is 3 vol% or less into direct contact with the CO₂ capturing material, the CO₂ capturing material can be efficiently heated.

Incidentally, both of the procedure of circulating the desorbed gas and the procedure of bringing the heating gas into direct contact with the CO₂ capturing material may be adopted, or the procedures may be adopted independently. Further, in the Example shown in Fig. 5, the description has been made with respect to the heating step (b) in which the CO₂ capturing material is heated, however, this Example may be applied in the same manner also to the heating step (e) in which the steam capturing material is heated using the steam capturing material in place of the CO₂ capturing material.

Incidentally, both of the procedure of heating the CO₂ capturing material in the heating step (b) and the procedure of heating the steam capturing material in the heating step (e) may be adopted, or the procedures may be adopted independently.

### Example 8

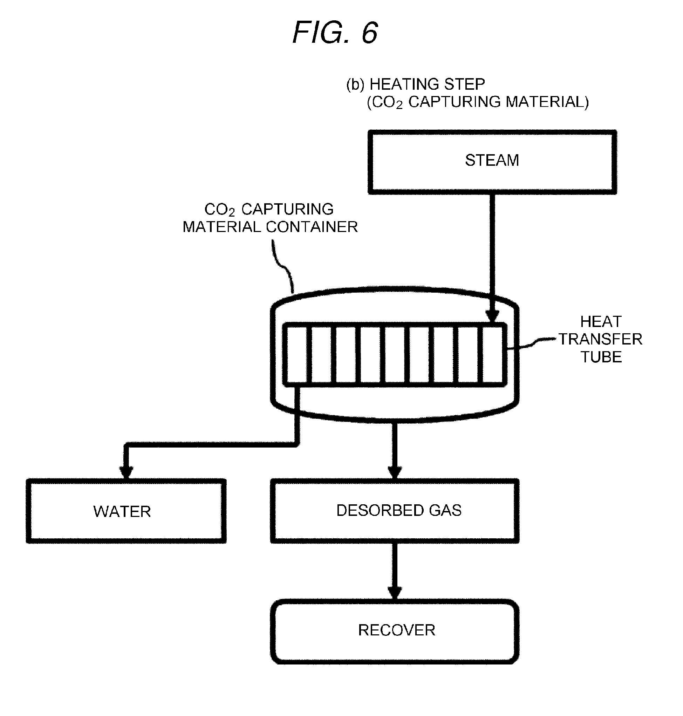

In Fig. 6, a process flow of heating the CO₂ capturing material using a part of the steam-containing gas vaporized by a boiler as the heating gas is shown. In addition to the structure of Example 6, a heat transfer tube is provided in the inside of the CO₂ capturing material container. In the heating step (b), by allowing steam to flow through the heat transfer tube, the CO₂ capturing material is heated, and water is discharged from the heat transfer tube. The desorbed gas generated by heating the CO₂ capturing material is discharged from the CO₂ capturing material container and recovered.

According to this structure, since the heating gas and the CO₂ capturing material do not come in direct contact with each other, the CO₂ capturing material can be heated using a gas having a high steam concentration.

Further, in the Example shown in Fig. 6, the description has been made with respect to the heating step (b) in which the CO₂ capturing material is heated, however, this Example may be applied in the same manner also to the heating step (e) in which the steam capturing material is heated using the steam capturing material in place of the CO₂ capturing material.

Incidentally, both of the procedure of heating the CO₂ capturing material in the heating step (b) and the procedure of heating the steam capturing material in the heating step (e) may be adopted, or the procedures may be adopted independently.

### Example 9

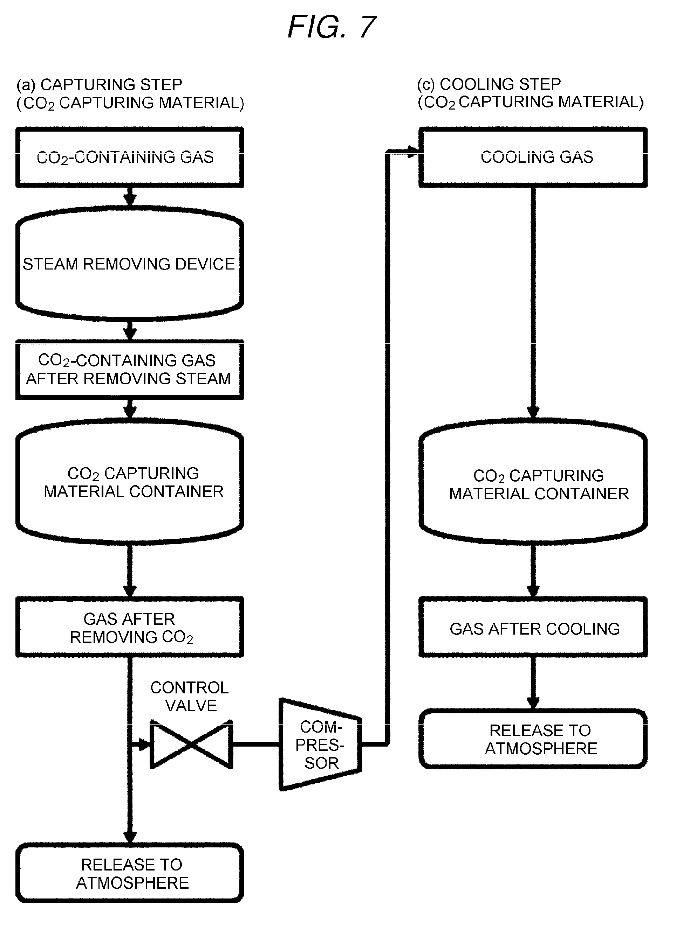

In Fig. 7, a process flow of allowing the gas after removing CO₂ discharged from the CO₂ capturing material container in the capturing step (a) to flow as the cooling gas is shown. In addition to the structure of Example 6, a control valve for controlling the flow rate of the gas after removing CO₂ and a compressor for pressurizing the gas after removing CO₂ are provided. The flow rate of a part of the gas after removing CO₂ discharged from the CO₂ capturing material container in the capturing step (a) is adjusted using the control valve, and the gas after removing CO₂ is pressurized by the compressor and allowed to flow through the CO₂ capturing material container as the cooling gas in the cooling step (c).

According to this structure, since the gas after removing CO₂ is used as the cooling gas, it is not necessary to newly introduce a cooling gas having a low steam concentration.

Further, in the Example shown in Fig. 7, the description has been made with respect to the cooling step (c) in which the CO₂ capturing material is cooled, however, this Example may be applied in the same manner also to the cooling step (f) in which the steam capturing material is cooled using the steam capturing material in place of the CO₂ capturing material.

Incidentally, both of the procedure of cooling the CO₂ capturing material in the cooling step (c) and the procedure of cooling the steam capturing material in the cooling step (f) may be adopted, or the procedures may be adopted independently.

### Example 10

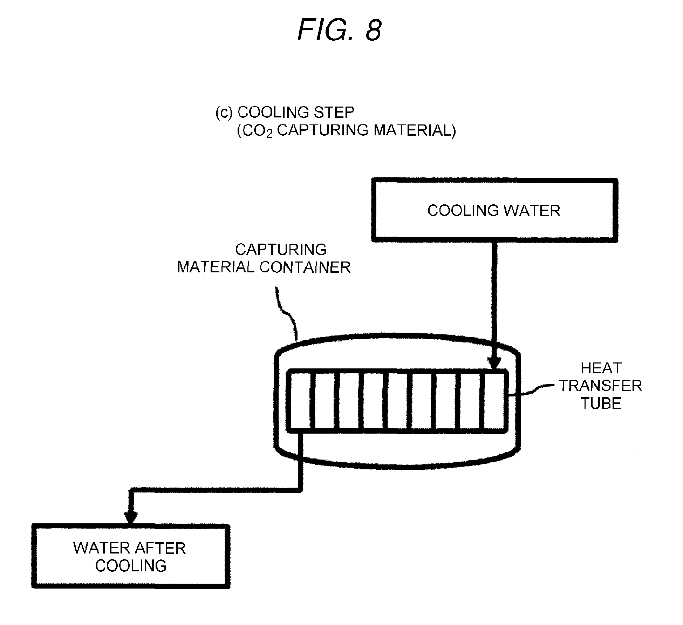

In Fig. 8, a process flow of cooling the CO₂ capturing material using cooling water is shown. In addition to the structure of Example 6, a heat transfer tube is provided in the inside of the CO₂ capturing material container. In the cooling step (c), by allowing cooling water to flow through the heat transfer tube and discharging the water after cooling from the heat transfer tube, the CO₂ capturing material is cooled.

According to this structure, since the cooling water and the CO₂ capturing material do not come in direct contact with each other, the CO₂ capturing material can be cooled even when the cooling medium contains water and steam.

Further, in the Example shown in Fig. 8, the description has been made with respect to the cooling step (c) in which the CO₂ capturing material is cooled, however, this Example may be applied in the same manner also to the cooling step (f) in which the steam capturing material is cooled using the steam capturing material in place of the CO₂ capturing material.

Incidentally, both of the procedure of cooling the CO₂ capturing material in the cooling step (c) and the procedure of cooling the steam capturing material in the cooling step (f) may be adopted, or the procedures may be adopted independently.

### Example 11

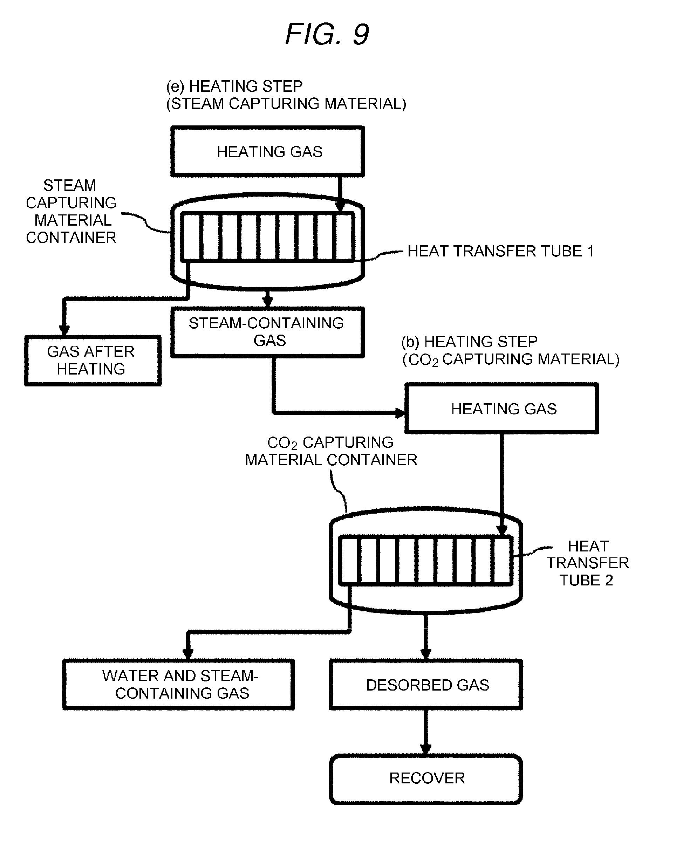

In Fig. 9, a process flow of heating the steam capturing material using a heat transfer tube and using a desorbed steam-containing gas for heating the CO₂ capturing material is shown. In addition to the structure of Example 6, a heat transfer tube 1 is provided in the inside of the steam capturing material container and a heat transfer tube 2 is provided in the inside of the CO₂ capturing material container. In the step of heating the steam capturing material, by allowing a heating gas to flow through the heat transfer tube 1, the steam capturing material is heated. After a steam-containing gas desorbed from the steam capturing material by the heating is discharged from the steam capturing material container, the steam-containing gas is allowed to flow through the heat transfer tube 2, and the CO₂ capturing material is heated. From the heat transfer tube 2, water and the steam-containing gas are discharged.

According to this structure, since the CO₂ capturing material is heated using the steam-containing gas desorbed when heating the steam capturing material, energy required for heating the CO₂ capturing material can be reduced.

Note that the present invention is not limited to the above-described examples, but includes various modifications. For example, the above-described examples have been described in detail so as to assist the understanding of the present invention, and the invention is not always limited to embodiments having all the described constituent elements. Further, it is possible to replace a part of constituent elements of an example with constituent elements of another example, and it is also possible to add a constituent element of an example to a constituent element of another example. Further, regarding a part of a constituent element of each example, it is possible to perform addition, deletion, or replacement using other constituent elements.

## Claims

1. A CO₂ separation and recovery method, in which CO₂ is separated and recovered from a CO₂-containing gas using a CO₂ capturing material, the CO₂ capturing material including a compound containing an organic molecule,
the method comprising the steps of:
capturing CO₂ by allowing the CO₂-containing gas to flow through a CO₂ capturing material container packed with the CO₂ capturing material;
heating the CO₂ capturing material to desorb and recover CO₂; and
cooling the CO₂ capturing material
wherein the method further comprises, before the step of capturing CO₂, the step of decreasing the steam concentration in the CO₂-containing gas, and
in the step of capturing CO₂, CO₂ is removed by allowing the CO₂-containing gas after decreasing the steam concentration to flow through the CO₂ capturing material container.

2. The CO₂ separation and recovery method according to claim 1, wherein in the step of decreasing the steam concentration in the CO₂-containing gas, the steam concentration in the CO₂-containing gas is decreased to 3 vol% or less.

3. The CO₂ separation and recovery method according to claim 1 or 2, wherein the CO₂ capturing material includes a porous complex including an aromatic organic molecule containing a carboxyl group and a hydroxyl group and at least one metal selected from Zn, Ni, Mg, and Co.

4. The CO₂ separation and recovery method according to any of claims 1 to 3, wherein the step of decreasing the steam concentration in the CO₂-containing gas includes the steps of:
capturing steam by allowing a CO₂-containing gas to flow through a steam capturing material container packed with a steam capturing material for capturing steam,
heating the steam capturing material to desorb the captured steam, and
cooling the steam capturing material.

5. The CO₂ separation and recovery method according to claim 4, wherein in the step of heating the CO₂ capturing material or the steam capturing material, a heat medium for heating is brought into direct contact with the CO₂ capturing material or the steam capturing material.

6. The CO₂ separation and recovery method according to claim 5, wherein the heat medium for heating is a CO₂-containing gas recovered in the heating step.

7. The CO₂ separation and recovery method according to claim 4, wherein a heat transfer tube is provided in the capturing material container, and in the step of heating the CO₂ capturing material or the steam capturing material, a heat medium for heating is allowed to flow through the heat transfer tube.

8. The CO₂ separation and recovery method according to claim 7, wherein the heat medium for heating is a combustion exhaust gas discharged from a boiler or the like or steam vaporized by heating with a boiler or the like.

9. The CO₂ separation and recovery method according to claim 4, wherein in the step of cooling the CO₂ capturing material or the steam capturing material, a low-temperature cooling medium is brought into direct contact with the CO₂ capturing material or the steam capturing material.

10. The CO₂ separation and recovery method according to claim 9, wherein the low-temperature cooling medium is a gas discharged from the CO₂ capturing material container in the step of capturing CO₂.

11. The CO₂ separation and recovery method according to claim 4, wherein a heat transfer tube is provided in the CO₂ capturing material container or the steam capturing material container, and in the step of cooling the CO₂ capturing material or the steam capturing material, a low-temperature cooling medium is allowed to flow through the heat transfer tube.

12. The CO₂ separation and recovery method according to claim 11, wherein the low-temperature cooling medium is air or water in a liquid phase.

13. The CO₂ separation and recovery method according to claim 4, wherein a gas discharged in the step of heating the steam capturing material is allowed to flow through a heat transfer tube provided in the inside of the CO₂ capturing material container, thereby heating the CO₂ capturing material.

14. The CO₂ separation and recovery method according to any one of claims 1 to 13, wherein the CO₂-containing gas is an exhaust gas from any of a coal firing boiler, a cement production plant, and an iron plant.

15. A CO₂ separation and recovery device, comprising:
a steam removing device which decreases the steam concentration in a CO₂-containing gas;
a CO₂ capturing material container packed with a CO₂ capturing material including a compound containing an organic molecule; and
a tube for allowing the CO₂-containing gas having passed through the steam removing device to flow through the CO₂ capturing material container.

16. The CO₂ separation and recovery device according to claim 15, wherein a tube for supplying a heating gas and a cooling gas to the CO₂ capturing material container is provided.

17. The CO₂ separation and recovery device according to claim 15, wherein a tube for supplying a heating gas and a cooling gas to the steam removing device is provided.
